# EUROPEAN PATENT SPECIFICATION

(11) **EP 0 627 159 B1**
(45) Date of publication and mention of the grant of the patent: **25.11.1998**
(21) Application number: 93201599.3
(22) Date of filing: 04.06.1993
(51) Int. Cl.: A01D 41/12, B60J 7/04

(54) **Cover members for agricultural harvester grain storage tank**
Deckel für Korntank einer Erntemaschine
Dispositif de couverture de réservoir à grain d'une moissonneuse

(43) Date of publication of application: 07.12.1994
(73) Proprietor: NEW HOLLAND BELGIUM N.V., B-8210 Zedelgem (BE)
(72) Inventor: Ramon, Mark E., B-8000 Brugge (BE); Van Overschelde, Daniel M. G., B-8820 Torhout (BE)
(74) Representative: Vandenbroucke, Alberic

(56) References cited:
- DE-C- 827 367
- DE-U- 8 521 247
- FR-A- 1 416 346
- FR-A- 1 548 495
- FR-A- 2 082 260
- US-A- 3 169 492
- US-A- 3 854 771
- US-A- 4 626 024

## Description

The present invention relates to a grain storage tank for use on an agricultural harvester, such as a combine harvester for example, and more particularly to the cover members used to close off a top opening of the grain tank for shielding the stored grain against adverse weather conditions.

In the following description, right hand and left hand references are determined by standing at the rear of the combine harvester facing in a direction of forward, operative travel. Also, in the following description, it is to be understood that terms such as "forward", "rearward", "left", "right", "upwardly", etc., are words of convenience and are not to be construed as limiting terms.

Commonly, nowadays combine harvesters are provided with large capacity grain tanks for temporarily storing the harvested grain before it is discharged, at appropriate intervals, into attendant vehicles or any other suitable receptacle. Traditionally, such a grain tank comprises a top opening not only permitting to access the interior of the tank for cleaning or servicing purposes but also providing the possibility to the combine operator, eventually the farmer, to have a clear, general top view of the grain being harvested and collected in the tank enabling a visual inspection of the state of the grain sample.

It is also a common practice to equip the grain tank with one or more pivotable cover members, which, in the open position, may extend upwardly from the tank and which serve to close off the top opening of the grain tank either during road transport for inhibiting the entrance of dirt on the one hand and reducing the overall height of the combine harvester on the other hand, or during a harvesting operation for shielding the grain contained in the tank from an occasional, unexpected shower.

Most often however, the covers are retained in an open condition during the harvesting process permitting an unobstructed top view on the collected grain as already mentioned and also allowing dust, which inevitably is produced under dry harvesting conditions, to evacuate the grain tank. In the generally upright position, the covers also may serve as extensions to the top of the grain tank thereby increasing the grain storage capacity thereof.

Several different embodiments of grain tank covers are employed in practice. In some arrangements, metal covers are used which have the advantage of being solid but which mostly are rather heavy and as a result are difficult to handle, especially in case the top opening of voluminous grain tanks have to be covered, requiring the use of large dimension covers. To facilitate the opening of such covers, gas springs or other resilient means, operating on the opening mechanism, usually are a prerequisite. Other embodiments prefer to use shieldings in which canvas or plastic materials are stretched over a metal framework rendering the structures less heavy. However, due to the light weight of such covers, locking means are required to prevent the inadvertent opening thereof by wind action. The provision of such locking means however may be disadvantageous in as much as it means that the grain tank covers no longer can be opened from different sides.

It furthermore is experienced that large grain tank covers, when placed in an open, upwardly extending position, are very sensitive to cross-wind and hence need to be firmly secured in said open position in order to prevent them either from flipping over or from being shut unintentionally, what could cause damage to both the covers and the grain tank or in the worst case even could lead to personal injury. Consequently, the provision of securing means again makes the grain tank less accessible from different sides.

The combine harvester shown in DE-U-85.21.247, which discloses a storage tank according to the preamble of claim 1 and an agricultural harvester according to the preamble of claim 9, has a grain tank with a single cover of which the front end is lifted up for inspection of the grain sample. A gas spring has been installed for alleviating the great weight of the cover. When the operator wants to access the interior of the grain tank for cleaning or servicing purposes, he first has to secure the front end of the cover to pivots on the front portion of the grain tank, gain access to the rear portion of the grain tank from the rear of the combine, release the pivot connection at the rear end of the cover and then raise this rear end under assistance of the gas spring. Such sequence of operations is cumbersome and a defective (re)connection of one of the pivots, which may occur easily under harsh field conditions, will result in a distortion of the pivots, gas springs and/or the cover itself when one of the cover ends is raised again.

A single cover is also disclosed in US-A-3.854.771, relating to agricultural trailers. Full access to the interior of the container can be gained by lifting up one end of the cover and shifting the entire cover sideways on a pair of wheeled legs. In its outmost position the cover is tilted 90° to secure it to the side of the container. Because of its large surface such cover would present various difficulties if mounted to the graintank of combine harvesters. For example the outer end of the grain tank is not readily accessible when the harvester is provided with a cab. In its upright position the cover seriously blocks the view of the operator, e.g. during unloading operations. The cover equally cannot be used to increase the grain tank capacity beyond its upper rim as there is no sealing between the upright cover and the border of the container.

It is therefore the objective of the present invention to overcome or at least attenuate all the aforementioned disadvantages of the prior art arrangements by providing grain tank covers which are easy to operate and enable a ready access to the grain tank from different sides, yet are simple in construction and assemblage.

According to the present invention, a grain storage tank for an agricultural harvester is provided comprising side walls, defining a top opening, and at least one cover member movable between a closed position, covering said top opening, and an open position, permitting access to the storage tank, and
characterized in that
said at least one cover member (36) comprises a two-part structure having a first lid (38) movable in a substantially horizontal direction and a second lid (40), operatively connected to said first lid (38);
said first and said second lids (38, 40) moving relative to each other when moving the at least one cover member (36) from said closed position towards said open position.

Preferably, the grain tank comprises two cover members which each cover half of the top opening of the tank and open in opposite, transverse directions. The transverse width of said top opening is reduced such as to enable said first member, when being moved to an open position, to be positioned on top of a fixed top shielding, whereas said second member is raised to an upwardly inclined position expanding the grain storage capacity of the tank.

A grain storage tank in accordance with the present invention will now be described in greater detail, by way of example, with reference to the accompanying drawings, in which
Figure 1 is a general diagrammatic side elevation of a combine harvester incorporating a grain storage tank in accordance with the present invention;
Figure 2 is a front view of the top portion of the grain storage tank showing the covers in the closed position;
Figure 3 is a plan view of Figure 2;
Figure 4 is a detailed sectional view, to a larger scale, taken in the direction of arrows F in Figure 3; and
Figure 5 is a view similar to Figure 2 but showing the covers in the open position.

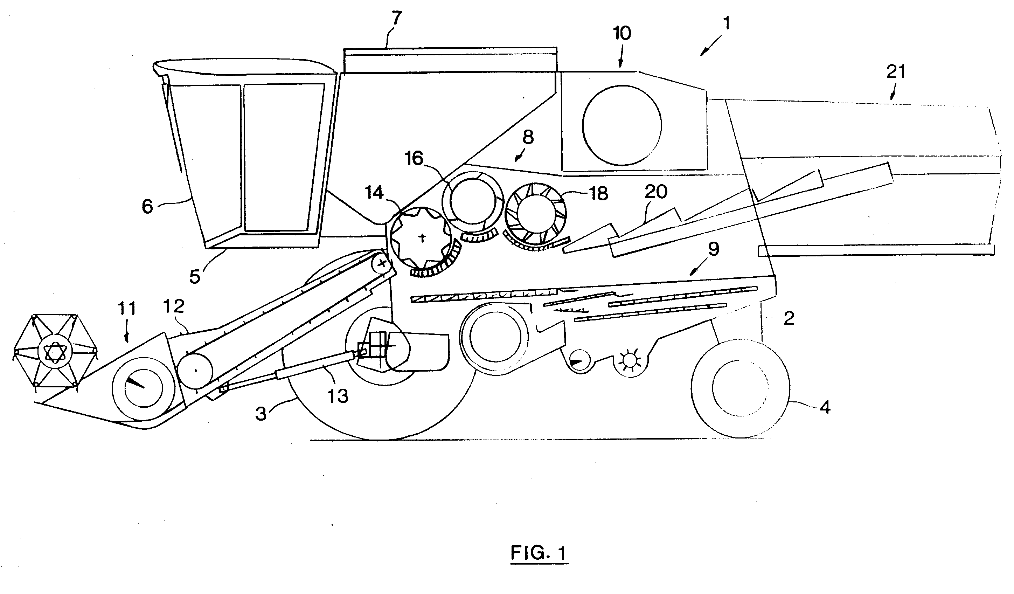

With reference to the drawings, particularly Figure 1, a combine harvester, generally indicated at 1, comprises a main chassis or frame 2 supported on a front pair of drive wheels 3 and a rear pair of steerable wheels 4. Supported on the main chassis 2 are an operator's platform 5, with operator's cab 6, a grain tank 7, a threshing and separating mechanism 8, a grain cleaning mechanism 9 and a power plant or engine 10. A conventional header 11 and straw elevator 12 extend forwardly of the main chassis 2 and the header 11 is pivotally secured to the chassis 2 for generally vertical movement which is controlled by extensible hydraulic cylinders 13.

As the combine harvester 1 is propelled forwardly over a field with standing crop, the latter is severed from the stubble by a sickle bar on the header 11, whereafter the header 11 and the straw elevator 12 supply the cut crop to the threshing and separating mechanism 8. The crop received therein is threshed and separated, that is to say, the crop is rubbed and beaten, whereby the grain, seed or the like, is loosened and separated from the straw, coils or other discardable part of the crop.

The combine harvester illustrated in Figure 1 comprises a conventional threshing and separating mechanism including a threshing cylinder 14, a straw beater 16 and a separator rotor 18. Conventional straw walkers 20 are operable, in use, to discharge a mat of remaining crop material (i.e. mainly straw as the grain is separated therefrom) through the straw hood 21. Grain which has been separated from the straw falls onto the grain cleaning mechanism 9 which comprises means to separate chaff and other impurities from the grain, and means to separate unthreshed parts, known as tailings. Cleaned grain is then elevated into the grain tank 7 by means of a grain elevator (not shown) and the tailings are reprocessed in separate tailings rethreshers (equally not shown) and returned to the cleaning mechanism 9 for repeated cleaning action.

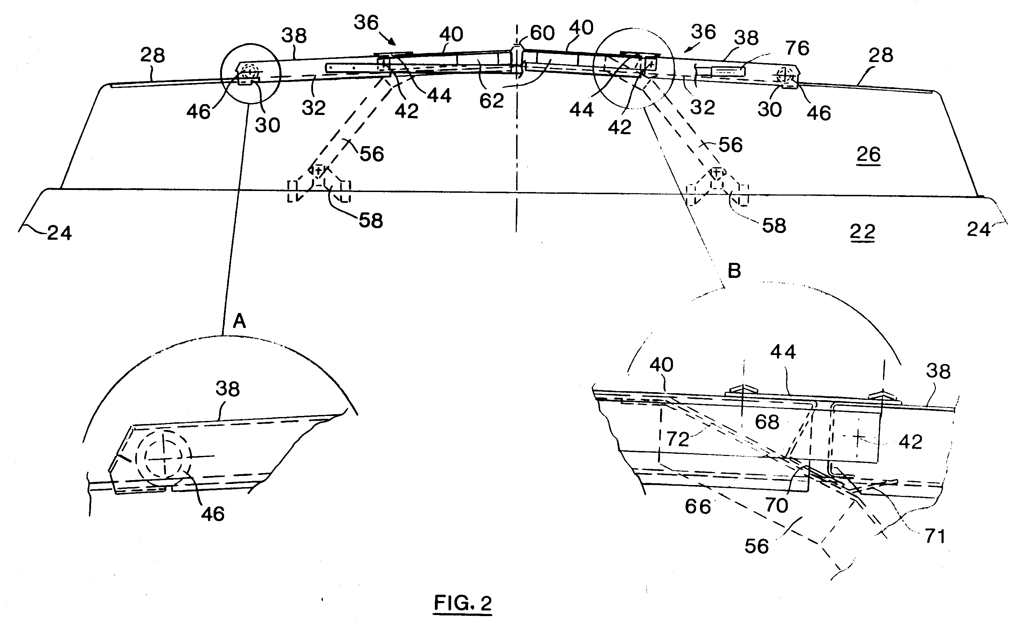

As best seen in Figures 2 to 5, the top portion of the grain tank 7 is of a generally rectangular shape including front and rear walls 22 interconnected by a pair of laterally spaced side walls 24. The front and rear walls 22 are extended with roof-shaped members 26 in turn interconnected at lateral portions thereof with longitudinally extending fixed shieldings 28, which form an inwardly directed continuation of the side walls 24. The inner edges 30 of the shieldings 28 together with the top edges 32 of the central portion of the roof-shaped members 26 define a quadrilateral, upwardly facing opening 34, which, in the condition as shown in Figure 2, is covered with a pair of cover members 36.

In the closed condition, each cover member 36 longitudinally extends over half of the top opening 34 and in as much as the left and right cover members 36 are generally the mirror image of each other, only one such member 36 will be described in detail. It furthermore is seen that each member 36 has a symmetrical design which means that in fact the left and right cover members 36 are identical in shape. Each member 36 comprises a two-part structure having a first, outer lid portion 38 and an inner lid portion 40, the latter being pivotally attached to the former at pivots 42. When closed, the lids 38 and 40 are in line with each other and extend parallel to the top portion of the fixed shielding 28. At their top facing edges, the transition between the lids 38 and 40 is covered with a flexible seal 44, e.g. a rubber strip, in order to prevent water from entering the tank 7.

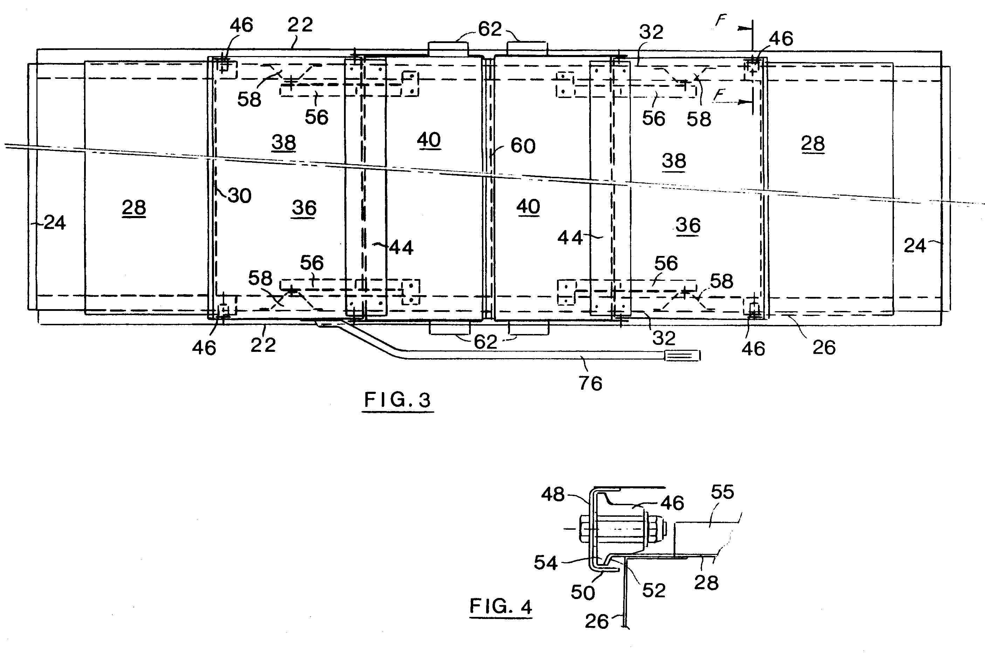

The outward end of the lid 38 is slidably supported on the fixed shielding 28 by means of a pair of rollers 46, one such roller being shown in detail in an enlarged portion A of Figure 2 and in Figure 4, which is a sectional view taken in the direction of arrows F as indicated in Figure 3. The roller 46 is rotatably attached to a transversely oriented reinforcement 48 of the lid 38, which, in the immediate region of the roller 46, is U-shaped. A lower limb 50 of the reinforcement 48 hooks over a horizontally projecting rim 52 of the shielding 28 thereby preventing the roller 46 to loose contact with the upper surface thereof, or in other words preventing that the outward end of the lid 38 would lift from the shielding 28. A flange portion 54, outwardly extending from the roller 46, bears against a curved part of the rim 52. As such, the rollers 46 provided at opposed sides of the lid 38, further cooperate with each other to centre said lid 38 on the corresponding shielding 28. Inbetween the rollers 46, the shielding 28 further comprises a vertically oriented rim 55, operable to keep generally horizontally driven rain out of the tank 7.

Two angled pivot arms 56 are at one end fixedly attached to the inner lid 40 whereas the other ends thereof are pivotally connected to supports 58 provided inwardly of the grain tank 7. The innermost, longitudinal side of the lid 40 is provided with an angled edge 60 which cooperates with a similar edge 60 of the oppositely lying lid 40 when both covers 36 are in their closed position.

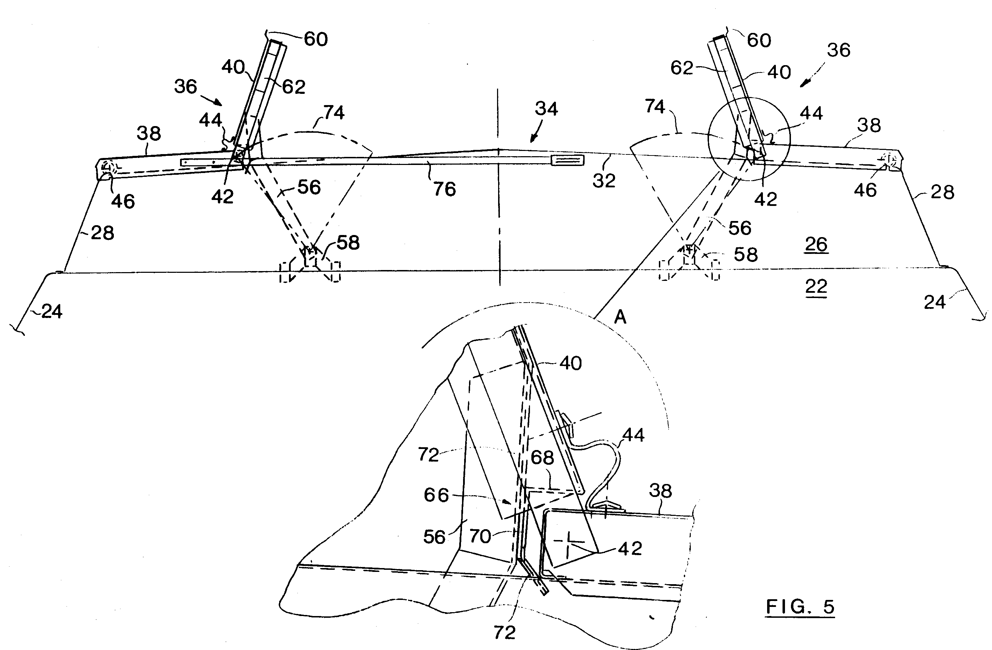

To facilitate the opening of a cover member 36, handles 62 are attached to the lateral sides of the lid 40. By pulling a handle 62 in a laterally outward direction, the corresponding cover member 36 is moved to an opened position as shown particularly in Figure 5. In said open position, each outer lid 38 lies parallel to and is positioned on top of the respective shieldings 28 whereas the inner lids 40 extend generally upwardly from the lateral sides of the top opening 34 of the grain tank 7, thereby enlarging the grain storage capacity thereof. As best seen in an enlarged portion B of Figure 2 and a similar detailed view A of Figure 5, the side 66 of the lid 40 facing the lid 38 is generally trough-shaped and comprises a downwardly and inwardly slanting portion 68, a bottom portion 70 and an outwardly directed portion 71. This arrangement serves a double function. First of all, a reinforcement is created which adds rigidity to the lid 40 and provides a firm support to the pivot arms 56. And secondly, the arrangement of the trough-shaped side 66 around the adjacent end of the outer lid 38 is such that grain contained in the tank 7 is unable to penetrate into the trough 66, neither in the opened nor in the closed condition of a cover member 36, so as to ensure that the hinge connection between the lids 38 and 40 cannot become obstructed. Extending between the top surface of the lid 40 and the bottom portion 70 of the trough 66, a further plate 72 is provided which, together with said top surface and said bottom portion 70, forms a triangled stiffening beam. The plate 72 is also operable to direct grain away from the hinge connection between the lids 38 and 40.

To further assist in keeping said hinge connection free from any grain, it is seen in phantom lines in Figure 5 that when moving a cover member 36 from the closed to the open position and vice versa, the pivots 42, connecting the inner and outer lids 38, 40 to each other, are moved over a circular arc 74, having its fulcrum on the supports 58. Accordingly, an initial movement of the pivots 42, be it from the closed to the open position of a cover member 36 or vice versa, is always directed upwardly, i.e. away from the grain which eventually may pile up against the bottom side of the hinge connection.

As already mentioned, the inner lids 40 together with their associated pivot arms 56 define a rigid, inflexible structure and also the outer lids 38 have the same characteristic. It therefore will be appreciated that each cover member 36 can be opened, at wish, from either the front side or the rear side of the grain tank 7 in as much as an imposed movement on one side of a cover member 36 is, due to its rigidity, accompanied by an identical movement of the opposed side of said member 36. This feature is readily applicable to the grain tank 7 shown in Figure 1 considering that said tank 7 is positioned inbetween the operator's cab 6 and the engine compartment 10 and therefore is accessible from both the front and rear side.

It further will be appreciated that, although the handles 40 are shown in the drawings as attached to the inner lids 40 (which is the preferred embodiment), they also may be connected to the outer lids 38 which still would allow the covers 36 to be opened since the outer lids 38 are hingeably connected to the inner lids 40. As such, any movement imposed on an outer lid 38 results in a corresponding movement of the associated inner lid 40. This characteristic is relied upon for attaching an elongated handle 76 to the right hand outer lid 38 which extends from close to the pivot 42 towards the transversely opposite side of the grain tank 7. Said handle 76 enables an operator, standing on the platform 5 at the left hand side of the operator's cab 6, to open the right hand cover 36 without having to climb on said cab 6.

Referring specifically to Figures 2 and 5, it is observed that the supports 58 are positioned generally centrally inbetween the extreme positions of the pivots 42, what means that the angled pivot arms 56 always go over-centre when the covers 36 are opened, respectively closed. In other words, the weight of the covers 36 retains the same firmly in either the opened or the closed position without having to provide additional retaining means, respectively locking means.

Although the cover members 36 are made of metal, they nevertheless are easy to handle for several reasons. Indeed, by extending the lateral side walls 24 transversely inwardly by means of the shieldings 28, the transverse width of the top opening 34 is reduced meaning that cover members 36 of smaller dimensions may be employed. Also, since two cover members 36 have been provided, only half of the opening 34 has to be closed off by a single member 36. Most importantly however, the outer lid 38 is moved in a substantially horizontal direction and is slided with low friction on the rollers 46, meaning that only a minimal effort is required to urge this part of a cover member 36 to the open position or vice versa. This leaves us with only the inner lid 40 which effectively has to be pivoted to a raised position. It will be understood however that the transverse dimensions of said lid 40 are such that the foregoing presents no problem.

## Claims

1. A grain storage tank (7) for an agricultural harvester (1) comprising side walls (22, 24), defining a top opening (34), and at least one cover member (36) movable between a closed position, covering said top opening (34), and an open position, permitting access to the storage tank (7), and
characterized in that
said at least one cover member (36) comprises a two-part structure having a first lid (38) movable in a substantially horizontal direction and a second lid (40), operatively connected to said first lid (38);
said first and said second lids (38, 40) moving relative to each other when moving the at least one cover member (36) from said closed position towards said open position.

2. A grain storage tank according to claim 1 characterized in that, upon opening the at least one cover member (36), the first lid (38) moves in said substantially horizontal direction, whereas the second lid (40) rises to an upwardly inclined position.

3. A grain storage tank according to claim 2 characterized in that at least one of the side walls (22, 24) is prolonged with a fixed, generally horizontal top shielding (28) extending in an inward direction relative to the grain storage tank (7) over a distance approximately equal to the width of the first lid (38) as measured in the same direction.

4. A grain storage tank according to claim 3 characterized in that the first lid (38) comprises a set of rollers (46) slidably supporting said lid (38) on the shielding (28); said lid (38), when in the open position, being positioned on top of and completely covering said shielding (28).

5. A grain storage tank according to claims 3 or 4 characterized in that the second lid (40) is provided with pivot arms (56), which are fixedly attached to said second lid (40) on the one hand and are pivotally connected to pivots (58) in the grain tank (7) on the other hand; the arrangement being such that in the raised position, said second lid (40) extends generally upwardly from an inner edge (30) of the shielding (28).

6. A grain storage tank according to any of the preceding claims characterized in that pivots (42) pivotally connect the first lid (38) to the second lid (40); the arrangement being such that a movement imposed on one of said lids (38, resp. 40) effects a corresponding movement of the other one of said lids (40, resp. 38).

7. A grain storage tank according to any of the claims 3 to 6 characterized in that the first and second lids (38, 40), in the closed position, are generally in line with each other and extend parallel to the top surface of the shielding (28), whereas in the open position, the first and second lids (38, 40) are at an angle relative to each other.

8. A grain storage tank according to any of the preceding claims characterized in that an edge (66) of the second lid (40) facing the first lid (38) is trough-shaped and is subjected to an initially upwardly directed movement away from the interior of the grain tank (7) when opening or closing the at least one cover member (36).

9. An agricultural harvester (1) comprising an operator's station (5), an engine compartment (10) and a grain storage tank (7)
characterized in that said tank (7) is according to any of the preceding claims, and comprises a second cover member (36), the cover members (36) being the mirror image of each other and being oriented longitudinally of the harvester (1) as seen in the direction of operative travel;
the grain tank (7) being positioned inbetween said operator's station (5) and said engine compartment (10) and each cover member (36) being provided with handles (62, 68) at longitudinal opposite sides thereof, enabling each cover member (36) to be opened from a position either at the operator's station (5) or at the engine compartment (10).

10. An agricultural harvester according to claim 8 characterized in that at the side of the grain tank (7) adjacent to the operator's station (5), one of the cover members (36) is provided with an elongated handle (68) projecting transversely outwardly to the opposite side of the tank (7) enabling both cover members (36) to be opened from an eccentric position on the operator's station (5).

## Patentansprüche

1. Korntank (7) für eine landwirtschaftliche Erntemaschine (1), mit Seitenwänden (22, 24), die eine obere Öffnung (34) umgrenzen, und mit zumindest einem Deckelteil (36), das zwischen einer geschlossenen Stellung, in der die obere Öffnung (34) abgedeckt ist, und einer offenen Stellung beweglich ist, in der ein Zugang an den Korntank (7) ermöglicht wird,
dadurch gekennzeichnet, daß:
das zumindest eine Deckelteil (36) eine zweiteilige Konstruktion mit einem ersten Deckelabschnitt (38), der in einer im wesentlichen horizontalen Richtung beweglich ist, und einem zweiten Deckelabschnitt (40) aufweist, der betriebsmäßig mit dem ersten Deckelabschnitt (38) verbunden ist,
und daß die ersten und die zweiten Deckelabschnitte (38, 40) sich relativ zueinander bewegen, wenn das zumindest eine Deckelteil (36) von der geschlossenen Stellung in Richtung auf die offene Stellung bewegt wird.

2. Korntank nach Anspruch 1,
dadurch gekennzeichnet, daß beim Öffnen des zumindest einen Deckelteils (36) der erste Deckelabschnitt (38) sich in der im wesentlichen horizontalen Richtung bewegt, während der zweite Deckelabschnitt (40) auf eine nach oben geneigte Position angehoben wird.

3. Korntank nach Anspruch 2,
dadurch gekennzeichnet, daß zumindest eine der Seitenwände (22, 24) durch eine feste, allgemein horizontale obere Abdeckung (28) verlängert ist, die sich in einer nach innen gerichteten Richtung bezüglich des Korntanks (7) über eine Strecke angenähert gleich der Breite des ersten Deckelabschnitts (38), gemessen in der gleichen Richtung, erstreckt.

4. Korntank nach Anspruch 3,
dadurch gekennzeichnet, daß der erste Deckelabschnitt (38) einen Satz von Rollen (46) aufweist, die den Deckelabschnitt (38) auf der Abdeckung (28) gleitend haltern, und daß der Deckelabschnitt (38) in der offenen Stellung über der Abdeckung (28) angeordnet ist und diese vollständig überdeckt.

5. Korntank nach Anspruch 3 oder 4,
dadurch gekennzeichnet, daß der zweite Deckelabschnitt (40) mit Schwenkarmen (56) versehen ist, die einerseits fest an dem zweiten Deckelabschnitt (40) angebracht sind und die andererseits schwenkbar mit Schwenkpunkten (58) in dem Korntank (7) verbunden sind, wobei die Anordnung derart ist, daß in der angehobenen Stellung der zweite Deckelabschnitt (40) sich allgemein von einer Innenkante (30) der Abdeckung (28) aus nach oben erstreckt.

6. Korntank nach einem der vorhergehenden Ansprüche,
dadurch gekennzeichnet, daß Schwenkpunkte (42) den ersten Deckelabschnitt (38) schwenkbar mit dem zweiten Deckelabschnitt (40) verbinden, wobei die Anordnung derart ist, daß eine auf einen der Deckelabschnitte (38 bzw. 40) ausgeübte Bewegung eine entsprechende Bewegung des anderen der Deckelabschnitte (40 bzw. 38) bewirkt.

7. Korntank nach einem der Ansprüche 3 bis 6,
dadurch gekennzeichnet, daß die ersten und zweiten Deckelabschnitte (38, 40) in der geschlossenen Stellung allgemein miteinander ausgerichtet sind und sich parallel zu der oberen Oberfläche der Abdeckung (28) erstrecken, während in der offenen Stellung die ersten und zweiten Deckelabschnitte (38, 40) unter einem Winkel relativ zueinander stehen.

8. Korntank nach einem der vorhergehenden Ansprüche,
dadurch gekennzeichnet, daß eine Kante (66) des zweiten Deckelabschnitts (40), die auf den ersten Deckelabschnitt (38) gerichtet ist, wannenförmig ist und einer anfänglich nach oben gerichteten Bewegung von dem Inneren des Korntanks (7) fort ausgesetzt ist, wenn das zumindest eine Deckelteil (36) geöffnet oder geschlossen wird.

9. Landwirtschaftliche Erntemaschine (1) mit einem Fahrerstand (5), einem Motorraum (10) und einem Korntank (7),
dadurch gekennzeichnet,
daß der Tank (7) gemäß einem der vorhergehenden Ansprüche ausgebildet ist und ein zweites Deckelteil (36) aufweist, wobei diese Deckelteile (36) spiegelbildlich zueinander ausgebildet und in Längsrichtung der Erntemaschine (1) bei Betrachtung in Richtung der Betriebsbewegung ausgerichtet sind,
der Korntank (7) zwischen dem Fahrerstand (5) und dem Motorraum (10) angeordnet ist, und jedes Deckelteil (36) mit Handgriffen (62, 68) an in Längsrichtung gegenüberliegenden Seiten hiervon versehen ist, was es ermöglicht, daß jedes Deckelteil (36) von einer Position entweder am Fahrerstand (5) oder an dem Motorraum (10) aus geöffnet werden kann.

10. Landwirtschaftliche Erntemaschine nach Anspruch 8, dadurch gekennzeichnet, daß an der dem Fahrerstand (5) benachbarten Seite des Korntanks (7) eines der Deckelteile (36) mit einem langgestreckten Handgriff (68) versehen ist, der in Querrichtung nach außen zu der entgegengesetzten Seite des Tanks (7) vorspringt, was es ermöglicht, daß beide Deckelteile (36) von einer exzentrischen Position am Fahrerstand (5) aus geöffnet werden können.

## Revendications

1. Réservoir (7) de stockage de grain pour une moissonneuse agricole (1), comprenant des parois latérales (22, 24) définissant une ouverture supérieure (34), et au moins un élément de couvercle mobile (36) entre une position fermée où il recouvre ladite ouverture supérieure (34), et une position ouverte permettant l'accès au réservoir à grain (7), et
caractérisé en ce que
ledit au moins un élément (36) de couvercle comprend une structure en deux parties possédant un premier panneau (38) mobile dans un sens généralement horizontal et un second panneau (40), relié fonctionnellement audit premier panneau (38);
lesdits premier et second panneaux (38, 40) se déplaçant l'un par rapport à l'autre lors de l'ouverture de l'au moins un élément (36) de couvercle depuis ladite position fermée vers ladite position ouverte.

2. Réservoir de stockage de grain selon la revendication 1, caractérisé en ce que, lors de l'ouverture de l'au moins un élément (36) de couvercle, le premier panneau (38) se déplace dans ladite direction substantiellement horizontale, tandis que le second panneau (40) s'élève vers une position inclinée vers le haut.

3. Réservoir de stockage de grain selon la revendication 2, caractérisé en ce que l'au moins une des parois (22, 24) latérales est prolongée par une protection (28) supérieure généralement horizontale s'étendant vers l'intérieur par rapport au réservoir (7) de stockage de grain sur une distance approximativement égale à la largeur du premier panneau (38) mesurée dans la même direction.

4. Réservoir de stockage de grain selon la revendication 3, caractérisé en ce que le premier panneau (38) comprend un ensemble de galets (46) soutenant avec coulissement ledit panneau (38) sur la protection (28); ledit panneau (38) en position ouverte étant situé au sommet de ladite protection (28) et la recouvrant complètement.

5. Réservoir de stockage de grain selon les revendications 3 ou 4, caractérisé en ce que le second panneau (40) est équipé de bras (56) de pivotement reliés fixement d'une part audit second panneau (40) et reliés d'autre part avec pivotement à des pivots (58) situés dans le réservoir (7) à grain; l'arrangement étant tel qu'en position soulevée, ledit second panneau (40) s'étend généralement vers le haut à partir d'un bord (30) intérieur de la protection (28).

6. Réservoir de stockage de grain selon l'une quelconque des revendications précédentes, caractérisé en ce que des pivots (42) relient avec pivotement le premier panneau (38) et le second panneau (40); l'arrangement étant tel qu'un mouvement imposé à l'un desdits panneaux (38, resp. 40) entraîne un mouvement correspondant de l'autre desdits panneaux (40, resp. 38).

7. Réservoir de stockage de grain selon l'une quelconque des revendications 3 à 6, caractérisé en ce que les premier et second panneaux (38, 40), en position fermée, sont généralement dans le prolongement l'un de l'autre et s'étendent parallèlement à la surface supérieure de la protection (28), tandis qu'en position ouverte, les premier et second panneaux (38, 40) forment un angle l'un par rapport à l'autre.

8. Réservoir de stockage de grain selon l'une quelconque des revendications précédentes, caractérisé en ce qu'un bord (66) du second panneau (40) faisant face au premier panneau (38) est en forme d'auge et est soumis à un mouvement initial vers le haut s'écartant de l'intérieur du réservoir (7) à grain lors de l'ouverture ou de la fermeture de l'au moins un élément (36) de couvercle.

9. Moissonneuse (1) agricole comprenant une plate-forme (5) de l'opérateur, un compartiment (10) de moteur et un réservoir (7) de stockage de grain,
caractérisée en ce que ledit réservoir (7) est selon l'une quelconque des revendications précédentes et comprend un second élément (36) de couvercle, les éléments (36) de couvercle étant l'image réfléchie l'un de l'autre et étant orientés longitudinalement par rapport à la moissonneuse (1) suivant la direction de déplacement en fonctionnement;
le réservoir (7) à grain étant positionné entre ladite plate-forme (5) de l'opérateur et ledit compartiment (10) de moteur, et chaque élément (36) de couvercle étant pourvu de poignées (62, 68) en leurs côtés longitudinaux opposés, permettant à chaque élément (36) de couvercle d'être ouvert à partir d'une position soit au niveau de la plate-forme (5) de l'opérateur, soit au niveau du compartiment (10) de moteur.

10. Moissonneuse agricole selon la revendication 8, caractérisée en ce que sur la face du réservoir (7) à grain adjacente à la plate-forme (5) de l'opérateur, un des éléments (36) de couvercle est équipé d'une poignée (68) allongée s'étendant transversalement vers l'extérieur en direction du côté opposé du réservoir (7), permettant aux deux éléments (36) de couvercle d'être ouverts à partir d'une position excentrique sur la plate-forme (5) de l'opérateur.
